# EUROPEAN PATENT SPECIFICATION

(11) **EP 4 410 529 B1**
(45) Date of publication and mention of the grant of the patent: **01.04.2026**
(21) Application number: 23382102.4
(22) Date of filing: 03.02.2023
(51) Int. Cl.: B29D 30/00, B65D 19/44, B65D 85/06, B65G 1/14, B65G 65/00, B65G 67/20, B65B 25/24, B66F 9/12, B66F 9/18

(54) **TYRE LOADING APPARATUS AND METHOD**
REIFENLADEVORRICHTUNG UND -VERFAHREN
APPAREIL ET PROCÉDÉ DE CHARGEMENT DE PNEUS

(43) Date of publication of application: 07.08.2024
(73) Proprietor: Bridgestone Europe NV/SA, 1930 Zaventem (BE)
(72) Inventor: HERNANDO, José Luis, 48970 Basauri (ES); PÉREZ, Rubén, 48970 Basauri (ES); MARTÍN, Ignacio, 48970 Basauri (ES); RODRIGUEZ HOYO, Jose Antonio, 48170 Zamudio (ES); OLALDE DEL VIGO, Gaizka, 48170 Zamudio (ES)
(74) Representative: Dehns

(56) References cited:
- EP-A1- 2 589 566
- WO-A1-2009/106086
- WO-A1-95/29119
- DE-U1- 202012 100 552
- US-A- 2 596 477
- US-A- 5 340 268

## Description

### Technical Field

The present invention relates to a tyre loading apparatus for carrying and depositing a tyre stack and a method for loading tyres into a loading location such as a trailer. In particular, but not exclusively, the present invention relates to a tyre loading apparatus for automated or semi-automated loading of tyres.

### Background

US 5 340 268 A discloses a compression rack with a horizontally movable back wall which serves to push the stacked compressed articles from the mechanism into a container which maintains the articles under compression. Further handling devices for tyre stacks are disclosed in DE 20 2012 100552 U1, WO 2009/106086 A1, EP 2 589 566 A1 and WO 95/29119 A1.

Transportation of tyres generally requires manual loading and stacking of each individual tyre onto the trailer of a heavy goods vehicle (HGV). Typically, the tyres may be manually loaded by at least one person onto a conveyor or a fork lift truck, which is used to transport the tyres into the trailer or up to the trailer doors. At least one further person (often two people) will then manually lift the tyres from the fork lift truck or the conveyor and then position each tyre in a stack inside the trailer. The tyres are typically loaded in rows starting from the back of the loading space inside the trailer. Each row of tyres generally extends the full width and height of the internal loading space of the trailer, and the tyres may be stacked in various patterns within each row to optimise the available space. Subsequent rows of tyres are then added until the rows of tyres reach the front the loading space, at which point the trailer has reached maximum capacity.

Such manual loading of tyres into a trailer is very time consuming, e.g. taking up to 2 to 3 hours to load and stack the rows of tyres so that only three trailers can be loaded per day. Such time-consuming loading is undesirable due to several factors including labour costs, limited available docking space for the trailer, and meeting expected delivery timescales. The manual loading process is also unpleasant for workers who have to stay inside the trailer to stack the tyres.

Manual loading of tyres onto a trailer has further drawbacks including health and safety concerns due to risk of falling tyres and repeated heavy lifting. Furthermore, with such manual loading, it can be difficult to effectively utilise the entire loading space within the trailer. Leaving empty space within the trailer is undesirable since this further increases transportation costs and time.

Accordingly, there remains a need for improved systems and methods of loading tyres into a trailer.

### Summary of the Invention

According to a first aspect of the present invention, there is provided a tyre loading apparatus for carrying and depositing a tyre stack as claimed in claim 1.

Advantageously, the tyre loading apparatus allows for a tyre stack to be carried and offloaded without the need for manual labour or any additional machinery. Since the tyre stack is deposited by retracting the side panels of the carrier element, rather than ejecting the tyre stack, the structure and integrity of the tyre stack can be maintained, and therefore the loading is more space efficient.

The retractable side panels may be driven to move relative to the back wall in any suitable way. For example, it may be possible to manually push the side panels between the extended position and the retracted position. However, in order to avoid the need for any manual input, the apparatus may comprise actuating means for each of the plurality of retractable side panels. In at least some examples, the apparatus further comprises one or more actuators arranged to drive movement of the retractable side panels between the extended position and the retracted position. The one or more actuators may be electrically controllable. For example, a pneumatic or hydraulic actuator mechanism may be arranged between the back wall and the retractable side panels. For example, a scissor mechanism may be arranged between the back wall and the retractable side panels.

Optionally, the tyre loading apparatus further comprises a support member configured to support the carrier element, wherein the back wall is rigidly coupled to the support member and the plurality of retractable side panels are movably coupled to the support member. The support member may be connected to an outer surface of the back wall, to avoid interfering with a tyre stack placed in contact with an inner surface of the back wall.

The support member provides the frame that allows the carrier element to be coupled to other components. This includes, for example, the connection of the plurality of retractable side panels to one or more actuators that produce their movement. The support member may also provide a framework for one or more actuators arranged to drive movement of the retractable side panels relative to the back wall. Optionally, in some embodiments, the plurality of retractable side panels is movably coupled to the support member by an actuator mechanism, such as a scissor mechanism.

Each of the plurality of retractable side panels is disposed perpendicular to a plane of the back wall. This can help to maintain the integrity of the tyre stack by providing straight side walls.

The orientation of the plurality of retractable side panels allows them to surround and hold a tyre stack in the carrier element.

The plurality of retractable side panels is configured to extend and retract to adjust a depth D of the carrier element substantially perpendicular to a plane of the back wall.

The extension and retraction of the plurality of retractable side panels in a direction substantially perpendicular to a plane of the back wall adjusts the depth D and hence allows the volume of the carrier element to be adjustable so that a stack of tyres can be held and deposited. The side panels can be extended so that the volume of the carrier element defines a depth D that is sufficient to hold a tyre stack. The side panels can be retracted so that the tyres are deposited from the carrier element. Optionally, one or more of the plurality of retractable side panels is further configured to compress the tyre stack held in the carrier element.

Advantageously, the tyre stack can be compressed in the carrier element so that the tyres are more tightly and securely stacked and can therefore fit into a smaller loading volume.

The plurality of retractable side panels comprises a lower panel, a first lateral panel and a second lateral panel, and the first lateral panel is opposite the second lateral panel.

The first lateral panel and the second lateral panel are separated by a width W, and at least one of the first lateral panel and the second lateral panel is configured to move relative to the back wall to increase or decrease the width W. This can act to horizontally compress the tyre stack.

Optionally, the plurality of retractable side panels comprises an upper panel opposite the lower panel that is separated from the lower panel by a height H, and wherein the upper panel is configured to move relative to the back wall to increase or decrease the height H. This can act to vertically compress the tyre stack.

Optionally, the support member comprises a tilt mechanism configured to tilt the carrier element such that a plane of the back wall is tilted backwards to define an angle less than 90° with the ground. For example, the support member may stay stationary while the tilt mechanism tilts the plane of the back wall backwards towards the support member.

Advantageously, the tilt mechanism allows for the tyre stack to be more securely held in the carrier element.

Optionally, the support member comprises a driving means for transportation of the tyre loading apparatus, and/or wherein the support member comprises a coupling element for coupling the tyre loading apparatus to an external drive means.

The driving means allows the tyre stack to be transported to the loading area.

Optionally, one or more (preferably each) of the plurality of retractable side panels comprises a plurality of retractable plates. The plates may be retractable independently of one another or linked to be retracted in unison.

Advantageously, the plurality of retractable plates allows for the retractable side panels to be more easily retracted against the tyre stack held in the carrier element. This avoids the structure of the tyre stack being disturbed.

Optionally, the plates may be connected to one another with spaces between them. This means that the plurality of plates can be retracted as a single entity but there is less material in the retractable side panels. This helps to make the carrier element more lightweight.

Optionally, one or more (preferably each) of the plurality of retractable side panels comprises a slip element for reducing traction between a surface the retractable side panel and a tyre stack. For example, the slip element comprises a plurality of rolling components such as rollers, wheels, and/or ball bearings at the inner surface of one or more (preferably each) of the plurality of retractable side panels.

Advantageously, the slip element allows for the retractable side panels to be more easily retracted against the tyre stack held in the carrier element. This avoids the structure of the tyre stack being disturbed.

Optionally, the back wall is sized and shaped to substantially correspond to the inner cross-sectional dimensions of a standard trailer.

Advantageously, the sizing of the back wall allows for a tyre stack to be loaded that corresponds to the inner cross-sectional dimensions of a standard trailer. The storage volume of the trailer can therefore be used more efficiently.

According to a second aspect of the present invention, there is provided a method for loading a stack of tyres using a tyre loading apparatus as described herein, the method comprising:
Step 100: extending each of the plurality of retractable side panels to an extended position;
Step 200: stacking one or more rows of tyres into the carrier element; Step 300: driving the tyre loading apparatus to a loading location; Step 400: positioning the carrier element such that the one or more rows of tyres are sandwiched between a wall of the loading location and the back wall of the carrier element or between a previously loaded stack of tyres in the loading location and the back wall of the carrier element; and Step 500: retracting the plurality of retractable side panels to a retracted position to deposit the one or more rows of tyres into the loading location.

Optionally, the method further comprises, after step 100, and before step 200: Step 150: opening the plurality of retractable side panels to an open position. The method further comprises, after step 200, and before step 300: Step 250: closing the side panels to compress the one or more rows of tyres.

### Brief description of the drawings

One or more non-limiting examples will now be described, by way of example only, and with reference to the accompanying figures in which:
Fig. 1 shows a perspective view of the front of a tyre loading apparatus according to an embodiment of the invention with the plurality of retractable side panels in the extended position.
Fig. 2 shows a perspective view of the back of the tyre loading apparatus with the plurality of retractable side panels in the extended position.
Fig. 3 shows a perspective view of the front of the tyre loading apparatus with the plurality of retractable side panels in the retracted position.
Fig. 4 shows a perspective view of the back of the tyre loading apparatus with the plurality of retractable side panels in the retracted position.
Fig. 5 shows a perspective view of the back of the tyre loading apparatus with the plurality of retractable side panels in the open position.
Fig. 6 shows a perspective view of the back of the tyre loading apparatus with the plurality of retractable side panels in the closed position.
Fig. 7 shows a side view of the tilt mechanism of the tire loading apparatus.
Fig. 8 shows a method for loading a stack of tyres using a tyre loading apparatus.

### Detailed description

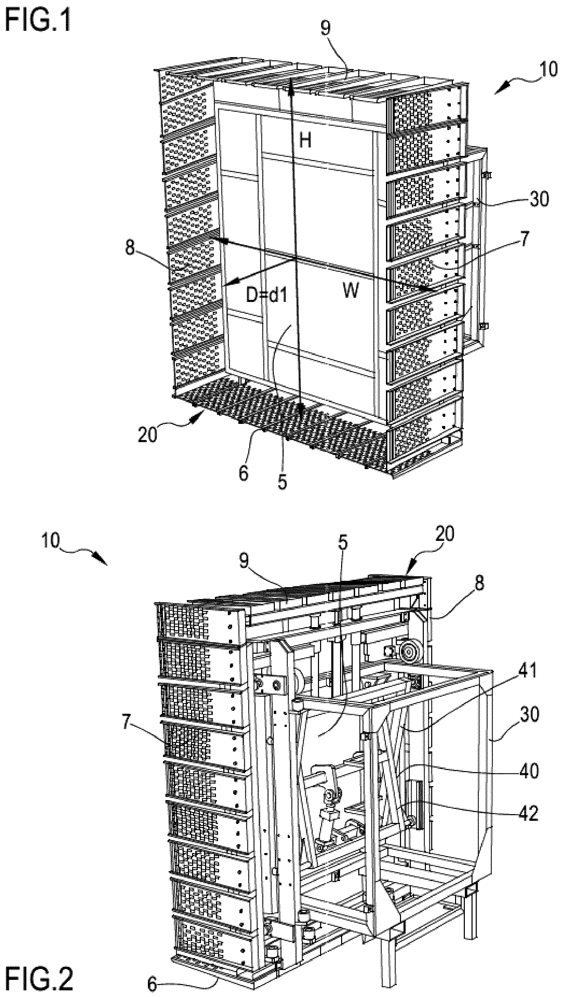

Figures 1 show a tyre loading apparatus 10 in accordance with an embodiment of the present invention. The tyre loading apparatus 10 comprises a carrier element 20 that is suitable for holding a stack of tyres (not shown). The carrier element 20 comprises a back wall 5 and a plurality of retractable of side panels 6, 7, 8, 9 that are disposed substantially perpendicular to a plane of the back wall 5. The back wall 5 and the plurality of retractable side panels 6, 7, 8, 9 define a volume V for holding a stack of tyres, where V = H*W*D. The volume defined by the carrier element 20 is adjustable by moving the plurality of retractable side panels 6, 7, 8, 9 relative to the back wall 5. The plurality of retractable side panels 6, 7, 8, 9 can be adjusted to modify a depth D, width W and height H.

The depth D of the volume V is adjusted by extending or retracting the plurality of retractable side panels 6, 7, 8, 9 in a direction substantially perpendicular to the plane of the back wall 5. As shown in figure 1, the side panels 6, 7, 8, 9 define a depth D=d₁ when they are in an extended position.

A support member 30, or frame, is rigidly coupled to the back wall 5 of the carrier element 20. The plurality of retractable side panels 6, 7, 8, 9 are movably coupled to the support member 30.As shown in figure 2, the plurality of retractable side panels 6 ,7, 8, 9 are movably coupled to the support member 30 by a scissor mechanism 40. The scissors mechanism 40 comprises collapsible supports 41, 42 that are linked by a connecting pin assembly to make an "X" shape. Each of the supports 41, 42 of the scissor mechanism 40 has a first end that is closer to the back wall 5 and a second end that is further from the back wall 5. In this embodiment, the first end of each of the supports 41, 42 is rigidly connected to the back wall 5, and the second end of the each of the supports 41, 42 is rigidly connected to at least the lateral side panels 7, 8. Opening and closing of the scissor mechanism 40 therefore retracts and extends the plurality of retractable side panels 6, 7, 8, 9 relative to the back wall 5.

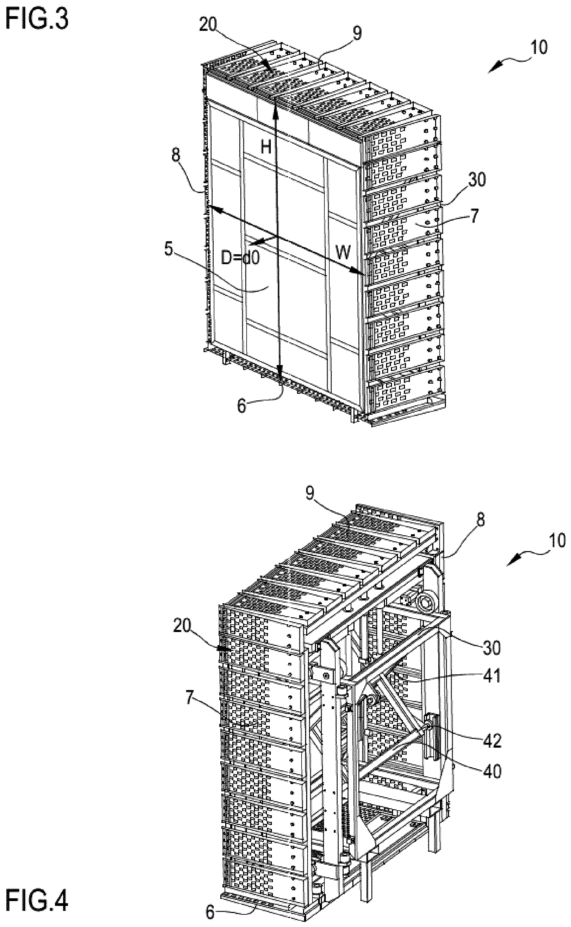

As shown in figures 3 and 4, the plurality of retractable side panels 6, 7, 8, 9 can be retracted in a direction substantially perpendicular to the plane of the back wall 5. The side panels 6, 7, 8, 9 can be retracted until the depth D = d₀, whereby the carrier element 20 can no longer hold the tyres. In this configuration, the plurality of retractable side panels 6, 7, 8, 9 are in a retracted position and the inner face of the back wall 5 is exposed.

The plurality of retractable side panels 6, 7, 8, 9 comprise an upper panel 9, a lower panel 6, a first lateral panel 7 and a second lateral panel 8, wherein the upper panel 9 is opposite the lower panel 6, and the first lateral panel 7 is opposite the second lateral panel 8. The upper panel 9 is separated from the lower panel 6 by a height H. The first lateral panel 7 and the second lateral panel 8 are separated by a width W.

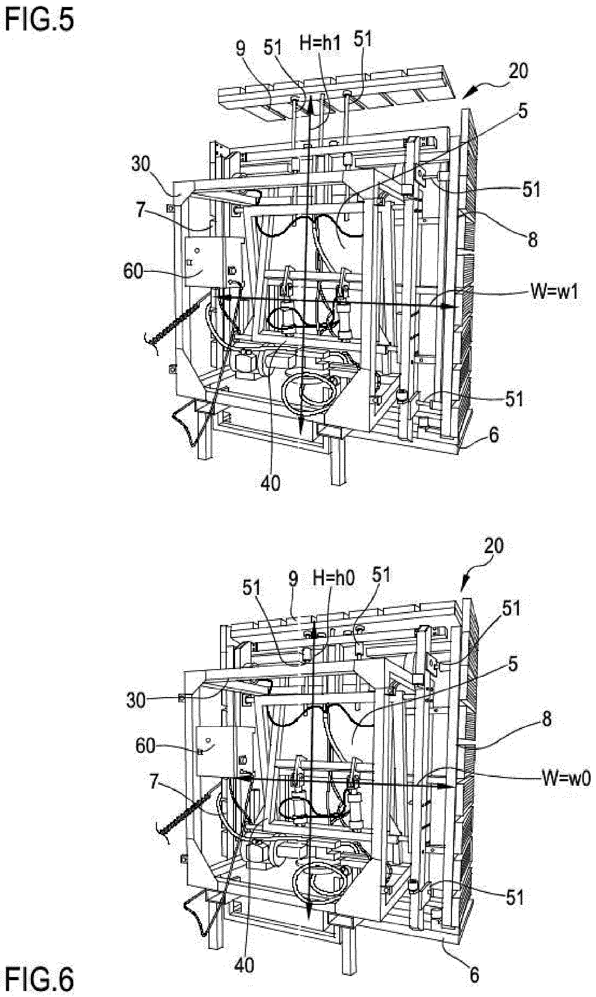

As well as moving substantially perpendicular to the plane of the back wall 5, at least some of the plurality of retractable side panels 7, 8, and 9 can move in a direction substantially parallel to the plane of the back wall 5. The upper panel 9 can be extended and retracted such that the height H can increase or decrease between a maximum height. In addition, the first and second lateral panels 7, 8 can be extended and retracted such that the width W can increase or decrease between a maximum width and a minimum width. As shown in figure 5, the height is increased to height h₁ and the width is increased to width w₁ (i.e. an open position). As shown in figure 6, the height is decreased to height h₀ and the width is decreased to width w₀ (i.e. a closed position). The extent to which the plurality of retractable side panels 7, 8, 9 are opened and closed will depend on the dimensions of the tyre stack and the extent to which they are to be compressed. In order to facilitate movement of the side panels 7, 8, 9 between the open and closed positions, the upper panel 9 and the first and second lateral panels 7, 8 are movably coupled to the support member 30 by linear actuators 51.

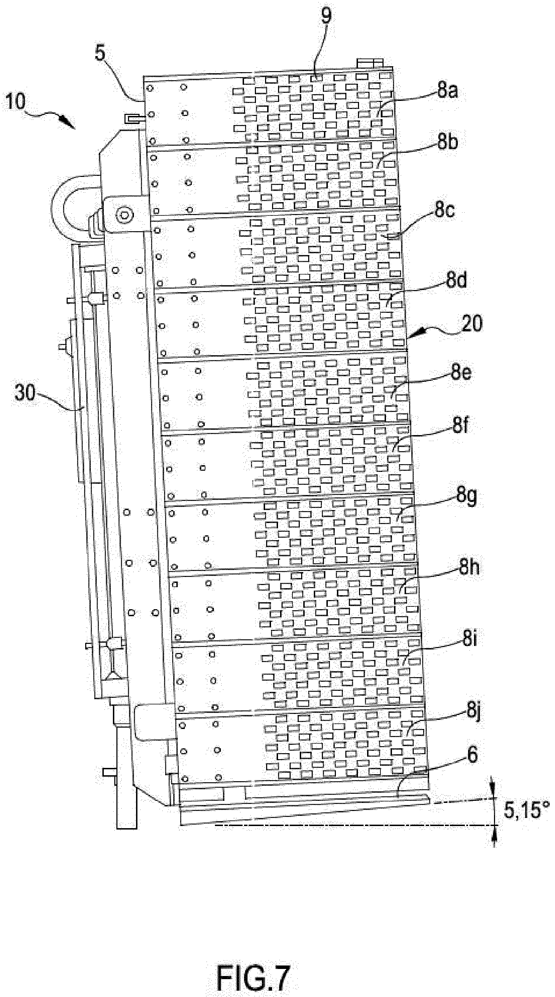

As shown in Figure 7, the carrier element 20 can be tilted. The carrier element 20 is coupled to the support member 30 such that the plane of the back wall is tilted towards the support member 30 at an angle. As a result, the plane of the back wall 5 is tilted backwards to define an angle less than 90° with the ground. In the embodiment shown in figure 7, the tilt of the carrier element 20 results in the lower side panel 6 being having an angle of 5.15 degrees relative to the ground and the back wall defining an angle of 84.85 degrees with the ground.

The support member 30 can comprise a drive means, such as wheels or tracks, for the transportation of the tyre loading apparatus 10. In addition, or alternatively, the support member 30 can comprise a coupling element for coupling the support member 30 to an external drive means, such as a fork lift truck. Coupling the support member 30 to a fork lift truck can allow for the carrier element 20 to be further tilted.

Each of the side panels 6, 7, 8, 9 can comprise a plurality of plates, for example the plates 8a-8j seen in Fig. 7. The plates 8a-8j are connected together in a linear arrangement but with spaces between them to provide a weight-saving for the carrier element 20.

It is also seen, for example, in Fig. 7, that the side panels 6, 7, 8, 9 may have rolling components (such as bearings) 9 embedded therein. This means that at least the inner faces of the side panels 6, 7, 8, 9 comprise a slip element for reducing traction between the inner surface of the side panels and the tyres held in the carrier element 20.

The back wall 5 of the carrier element can be sized and shaped to substantially correspond to inner cross-sectional dimensions of a trailer.

Control of the scissor mechanism 40, and optionally the linear actuators 51, that drive movement of the side panels 6, 7, 8, 9 can be controlled by a control unit 60 (seen in Figs. 3 and 4). If the support member 30 is coupled to a fork lift truck, the control unit may instead reside in the fork lift truck.

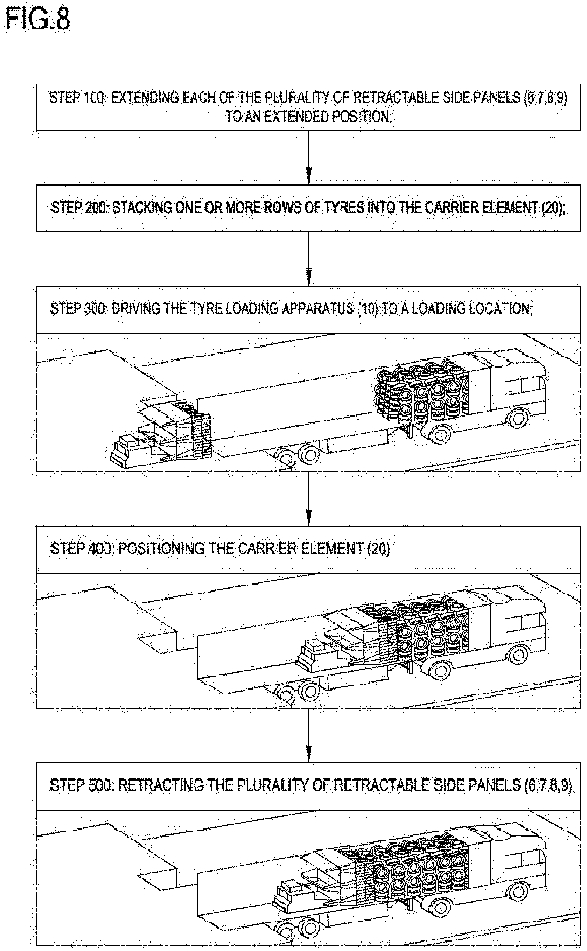

A method for loading a stack of tyres is now described, with reference to figure 8.

At step 100, the plurality of side panels 6, 7, 8, 9 are extended in a direction substantially perpendicular to the back wall 5 until the plurality of side panels 6, 7, 8, 9 reach an extended position and the volume contained by the carrier element 20 has a depth D = d₁ substantially perpendicular to the back wall 5.

At step 200, the tyres are stacked into the volume defined by the carrier element 20 by manual or automated means. The tyres can be stacked in a fishbone structure.

At step 300, the tyre loading apparatus is driven to the loading location. The tyre loading apparatus 10 can be driven by a drive means of the carrier element 20 or by an external drive means, such as a fork lift truck, coupled to the carrier element. The loading location can be the storage compartment of a truck.

At step 400, the carrier element 20 is positioned so that the one or more rows of tyres are sandwiched between a wall of the loading location and the back wall 5 of the carrier element 20 or between a previously loaded stack of tyres in the loading location and the back wall 5 of the carrier element 20.

At step 500, the plurality of side panels 6, 7, 8, 9 are retracted until the depth D of the volume = d₀. The stack of tyres is released from the carrier element and deposited onto the floor of the loading location.

Optionally, after step 100, and before step 200, step 150 can be completed. Step 150 comprises extending at least one of the side panels 7, 8, 9 to the open position. The side panels 7, 8, 9 are extended in a direction parallel to the plane of the back wall 5 to increase a width W and/or a height H of the volume V.

Optionally, after step 200, and before step 300, step 250 can be completed. Step 250 involves retracting at least one of the side panels 7, 8, 9 to the closed position, wherein the side panels 7, 8, 9 are retracted in a direction parallel to the plane of the back wall 5 to decrease a width W and/or a height H of the volume V. This compresses the tyres held in the tyre stack.

Various modifications to the above described examples may be possible. For example, the extension of the side panels to increase/decrease the depth D can be actuated by a mechanism other than a scissor mechanism, such as a screw drive, pneumatic actuator, hydraulic actuator, etc.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A tyre loading apparatus (10) for carrying and depositing a tyre stack, the apparatus comprising:
a carrier element (20) for holding the tyre stack, the carrier element (20) comprising a back wall (5) and a plurality of retractable side panels (6, 7, 8, 9), wherein each of the plurality of retractable side panels (6, 7, 8, 9) is configured to move relative to the back wall (5) between an extended position for holding a tyre stack in the carrier element (20) and a retracted position for depositing the tyre stack from the carrier element (20);
wherein each of the plurality of retractable side panels (6, 7, 8, 9) are disposed perpendicular to a plane of the back wall (5); and
the plurality of retractable side panels (6 ,7, 8, 9) is configured to extend and retract to adjust a depth D of the carrier element (20) substantially perpendicular to a plane of the back wall (5); and
the plurality of retractable side panels comprises a lower panel (6), a first lateral panel (7) and a second lateral panel (8), and the first lateral panel (6) is opposite the second lateral panel (7); **characterised in that**:
the first lateral panel (7) and the second lateral panel (7) are separated by a width W, and at least one of the first lateral panel (7) and the second lateral panel (8) is configured to move relative to the back wall (5) to increase or decrease the width W.

2. The tyre loading apparatus (10) of any preceding claim, further comprising a support member (30) configured to support the carrier element (20), wherein the back wall (5) is rigidly coupled to the support member (30) and the plurality of retractable side panels (6, 7, 8, 9) are movably coupled to the support member (30).

3. The tyre loading apparatus (10) of any preceding claim, wherein one or more of the plurality of retractable side panels (6 ,7, 8, 9) is further configured to compress the tyre stack held in the carrier element (20).

4. The tyre loading apparatus (10) of any preceding claim, wherein the plurality of retractable side panels (6 ,7, 8, 9) comprises an upper panel (9) opposite the lower panel (6) that is separated from the lower panel (6) by a height H, and wherein the upper panel (9) is configured to move relative to the back wall (5) to increase or decrease the height H.

5. The tyre loading apparatus (10) of claim 2 or any one of claims 3 to 4 when dependent on claim 2, wherein the support member (30) comprises a tilt mechanism configured to tilt the carrier element (20) such that a plane of the back wall (5) is tilted backwards to define an angle less than 90° with the ground.

6. The tyre loading apparatus (10) of claim 2 any one of claims 3 to 5 when dependent on claim 2, wherein the support member (30) comprises a driving means for transportation of the tyre loading apparatus (10), and/or wherein the support member (30) comprises a coupling element for coupling the tyre loading apparatus (10) to an external drive means.

7. The tyre loading apparatus (10) of any preceding claim, wherein each of the plurality of retractable side panels (6, 7, 8, 9) comprises a plurality of retractable plates.

8. The tyre loading apparatus of any preceding claim, wherein one or more (or each) of the plurality of retractable side panels (6, 7, 8, 9) comprises a slip element for reducing traction between a surface the retractable side panel and a tyre stack, wherein the slip element comprises a plurality of rolling components at the inner surface of one or more (or each) of the plurality of retractable side panels.

9. The tyre loading apparatus of any preceding claim, further comprising one or more actuators arranged to drive movement of the retractable side panels (6, 7, 8, 9) between the extended position and the retracted position.

10. A method for loading a stack of tyres using the tyre loading apparatus (10) of any preceding claim, the method comprising:
Step 100: extending each of the plurality of retractable side panels (6, 7, 8, 9) to an extended position;
Step 200: stacking one or more rows of tyres into the carrier element (20);
Step 300: driving the tyre loading apparatus (10) to a loading location;
Step 400: positioning the carrier element (20) such that the one or more rows of tyres are sandwiched between a wall of the loading location and the back wall (5) of the carrier element (20) or between a previously loaded stack of tyres in the loading location and the back wall (5) of the carrier element (20); and
Step 500: retracting the plurality of retractable side panels (6, 7, 8, 9) to a retracted position to deposit the one or more rows of tyres into the loading location.

11. The method of claim 10, further comprising, after step 100, and before step 200:
Step 150: opening the plurality of retractable side panels (6, 7, 8, 9) to an open position;
and after step 200, and before step 300:
Step 250: closing the side panels to compress the one or more rows of tyres.

## Patentansprüche

1. Reifenbeladungseinrichtung (10) zum Tragen und Absetzen eines Reifenstapels, die Einrichtung umfassend:
ein Trägerelement (20) zum Halten des Reifenstapels, das Trägerelement (20) umfassend eine Rückwand (5) und eine Vielzahl von zurückschiebbaren Seitenpaneelen (6, 7, 8, 9), wobei jedes der Vielzahl von zurückschiebbaren Seitenpaneelen (6, 7, 8, 9) konfiguriert ist, um sich relativ zu der Rückwand (5) zwischen einer ausgefahrenen Position zum Halten eines Reifenstapels in dem Trägerelement (20) und einer zurückgeschobenen Position zum Absetzen des Reifenstapels aus dem Trägerelement (20) zu bewegen;
wobei jedes der Vielzahl von zurückschiebbaren Seitenpaneelen (6, 7, 8, 9) senkrecht zu einer Ebene der Rückwand (5) angeordnet ist; und
die Vielzahl von zurückschiebbaren Seitenpaneelen (6, 7, 8, 9) konfiguriert ist, um sich auszufahren und zurückzuschieben, um eine Tiefe D des Trägerelementes (20) im Wesentlichen senkrecht zu einer Ebene der Rückwand (5) zu justieren; und
die Vielzahl von zurückschiebbaren Seitenpaneelen ein unteres Paneel (6), ein erstes seitliches Paneel (7) und ein zweites seitliches Paneel (8), umfasst und das erste seitliche Paneel (6) gegenüber dem zweiten seitlichen Paneel (7) ist; **dadurch gekennzeichnet, dass**:
das erste seitliche Paneel (7) und das zweite seitliche Paneel (7) durch eine Breite W voneinander getrennt sind, und mindestens eines von dem ersten seitlichen Paneel (7) und dem zweiten seitlichen Paneel (8) konfiguriert ist, um sich relativ zu der Rückwand (5) zu bewegen, um die Breite W zu vergrößern oder zu verringern.

2. Reifenbeladungseinrichtung (10) nach einem der vorstehenden Ansprüche, ferner umfassend ein Stützteil (30), das konfiguriert ist, um das Trägerelement (20) zu stützen, wobei die Rückwand (5) mit dem Stützteil (30) starr gekoppelt ist und die Vielzahl von zurückschiebbaren Seitenpaneelen (6, 7, 8, 9) mit dem Stützteil (30) bewegbar gekoppelt sind.

3. Reifenbeladungseinrichtung (10) nach einem der vorstehenden Ansprüche, wobei eines oder mehrere der Vielzahl von zurückschiebbaren Seitenpaneelen (6, 7, 8, 9) ferner konfiguriert ist, um den Reifenstapel, der in dem Trägerelement (20) gehalten wird, zu komprimieren.

4. Reifenbeladungseinrichtung (10) nach einem der vorstehenden Ansprüche, wobei die Vielzahl von zurückschiebbaren Seitenpaneelen (6, 7, 8, 9) ein oberes Paneel (9) gegenüber dem unteren Paneel (6), das von dem unteren Paneel (6) durch eine Höhe H getrennt ist, umfasst, und wobei das obere Paneel (9) konfiguriert ist, um sich relativ zu der Rückwand (5) zu bewegen, um die Höhe H zu vergrößern oder zu verringern.

5. Reifenbeladungseinrichtung (10) nach Anspruch 2 oder einem der Ansprüche 3 bis 4, wenn abhängig von Anspruch 2, wobei das Stützteil (30) einen Neigungsmechanismus, der konfiguriert ist, um das Trägerelement (20) derart zu neigen, dass eine Ebene der Rückwand (5) nach hinten geneigt wird, um einen Winkel von weniger als 90° mit dem Boden zu definieren, umfasst.

6. Reifenbeladungseinrichtung (10) nach Anspruch 2 oder einem der Ansprüche 3 bis 5, wenn abhängig von Anspruch 2, wobei das Stützteil (30) ein Antriebsmittel für Transport der Reifenbeladungseinrichtung (10) umfasst, und/oder wobei das Stützteil (30) ein Kopplungselement zum Koppeln der Reifenbeladungseinrichtung (10) mit einem externen Antriebsmittel umfasst.

7. Reifenbeladungseinrichtung (10) nach einem der vorstehenden Ansprüche, wobei jedes der Vielzahl von zurückschiebbaren Seitenpaneelen (6, 7, 8, 9) eine Vielzahl von zurückschiebbaren Platten umfasst.

8. Reifenbeladungseinrichtung nach einem der vorstehenden Ansprüche, wobei eines oder mehrere (oder jedes) der Vielzahl von zurückschiebbaren Seitenpaneelen (6, 7, 8, 9) ein Gleitelement zum Reduzieren von Traktion zwischen einer Oberfläche des zurückschiebbaren Seitenpaneels und einem Reifenstapel umfasst, wobei das Gleitelement eine Vielzahl von Rollkomponenten an der inneren Oberfläche einer oder mehrerer (oder jeder) der Vielzahl von zurückschiebbaren Seitenpaneelen umfasst.

9. Reifenbeladungseinrichtung nach einem der vorstehenden Ansprüche, ferner umfassend einen oder mehrere Stellantriebe, die arrangiert sind, um eine Bewegung der zurückschiebbaren Seitenpaneele (6, 7, 8, 9) zwischen der ausgefahrenen Position und der zurückgeschobenen Position zu treiben.

10. Verfahren zum Beladen eines Stapels von Reifen unter Verwendung der Reifenbeladungseinrichtung (10) nach einem der vorstehenden Ansprüche, das Verfahren umfassend:
Schritt 100: Ausfahren jedes der Vielzahl von zurückschiebbaren Seitenpaneelen (6, 7, 8, 9) in eine ausgefahrene Position;
Schritt 200: Stapeln einer oder mehrerer Reihen von Reifen in das Trägerelement (20);
Schritt 300: Treiben der Reifenbeladungseinrichtung (10) zu einem Beladungsort;
Schritt 400: Positionieren des Trägerelementes (20) derart, dass die eine oder die mehreren Reihen von Reifen zwischen einer Wand des Beladungsorts und der Rückwand (5) des Trägerelementes (20) oder zwischen einem zuvor beladenen Stapel von Reifen in dem Beladungsort und der Rückwand (5) des Trägerelementes (20) eingeschoben sind; und
Schritt 500: Zurückschieben der Vielzahl von zurückschiebbaren Seitenpaneelen (6, 7, 8, 9) in eine zurückgeschobene Position, um die eine oder die mehreren Reihen von Reifen in den Beladungsort abzusetzen.

11. Verfahren nach Anspruch 10, ferner umfassend, nach Schritt 100 und vor Schritt 200:
Schritt 150: Öffnen der Vielzahl von zurückschiebbaren Seitenpaneelen (6, 7, 8, 9) in eine offene Position;
und nach Schritt 200 und vor Schritt 300:
Schritt 250: Schließen der Seitenpaneele, um die eine oder die mehreren Reihen von Reifen zu komprimieren.

## Revendications

1. Appareil de chargement de pneu (10) destiné à porter et à déposer une pile de pneus, l'appareil comprenant :
un élément porteur (20) destiné à retenir la pile de pneus, l'élément porteur (20) comprenant une paroi arrière (5) et une pluralité de panneaux latéraux (6, 7, 8, 9) rétractables, dans lequel chacun de la pluralité de panneaux latéraux (6, 7, 8, 9) rétractables est conçu pour se déplacer par rapport à la paroi arrière (5) entre une position étendue pour retenir une pile de pneus dans l'élément porteur (20) et une position rétractée pour déposer la pile de pneus à partir de l'élément porteur (20) ;
dans lequel chacun de la pluralité de panneaux latéraux (6, 7, 8, 9) rétractables est disposé perpendiculairement à un plan de la paroi arrière (5) ; et
la pluralité de panneaux latéraux (6, 7, 8, 9) rétractables sont conçus pour s'étendre et se rétracter afin d'ajuster une profondeur D de l'élément porteur (20) sensiblement perpendiculaire à un plan de la paroi arrière (5) ; et
la pluralité de panneaux latéraux rétractables comprennent un panneau inférieur (6), un premier panneau latéral (7) et un second panneau latéral (8), et le premier panneau latéral (6) est opposé au second panneau latéral (7) ;
**caractérisé en ce que :**
le premier panneau latéral (7) et le second panneau latéral (7) sont séparés par une largeur W, et au moins l'un du premier panneau latéral (7) et du second panneau latéral (8) est conçu pour se déplacer par rapport à la paroi arrière (5) afin d'augmenter ou de diminuer la largeur W.

2. Appareil de chargement de pneu (10) selon l'une quelconque revendication précédente, comprenant en outre un élément de support (30) conçu pour soutenir l'élément porteur (20), dans lequel la paroi arrière (5) est accouplée de manière rigide à l'élément de support (30) et la pluralité de panneaux latéraux (6, 7, 8, 9) rétractables sont accouplés de manière mobile à l'élément de support (30).

3. Appareil de chargement de pneu (10) selon l'une quelconque revendication précédente, dans lequel l'un ou plusieurs de la pluralité de panneaux latéraux (6, 7, 8, 9) rétractables sont en outre conçus pour comprimer la pile de pneus retenue dans l'élément porteur (20).

4. Appareil de chargement de pneu (10) selon l'une quelconque revendication précédente, dans lequel la pluralité de panneaux latéraux (6, 7, 8, 9) rétractables comprennent un panneau supérieur (9) opposé au panneau inférieur (6) qui est séparé du panneau inférieur (6) par une hauteur H, et dans lequel le panneau supérieur (9) est conçu pour se déplacer par rapport à la paroi arrière (5) afin d'augmenter ou de diminuer la hauteur H.

5. Appareil de chargement de pneu (10) selon la revendication 2 ou l'une quelconque des revendications 3 à 4 lorsqu'elles dépendent de la revendication 2, dans lequel l'élément de support (30) comprend un mécanisme d'inclinaison conçu pour incliner l'élément porteur (20) de telle sorte qu'un plan de la paroi arrière (5) soit incliné vers l'arrière pour définir un angle inférieur à 90 ° avec le sol.

6. Appareil de chargement de pneu (10) selon la revendication 2, l'une quelconque des revendications 3 à 5 lorsqu'elles dépendent de la revendication 2, dans lequel l'élément de support (30) comprend un moyen d'entraînement pour le transport de l'appareil de chargement de pneu (10), et/ou dans lequel l'élément de support (30) comprend un élément d'accouplement destiné à accoupler l'appareil de chargement de pneu (10) à un moyen d'entraînement externe.

7. Appareil de chargement de pneu (10) selon l'une quelconque revendication précédente, dans lequel chacun de la pluralité de panneaux latéraux (6, 7, 8, 9) rétractables comprend une pluralité de plaques rétractables.

8. Appareil de chargement de pneu selon l'une quelconque revendication précédente, dans lequel l'un ou plusieurs (ou chacun) de la pluralité de panneaux latéraux (6, 7, 8, 9) rétractables comprennent(comprend) un élément de glissement destiné à réduire une traction entre une surface du panneau latéral rétractable et une pile de pneus, dans lequel l'élément de glissement comprend une pluralité de composants roulants au niveau de la surface interne de l'un ou plusieurs (ou chacun) de la pluralité de panneaux latéraux rétractables.

9. Appareil de chargement de pneu selon l'une quelconque revendication précédente, comprenant en outre un ou plusieurs actionneurs disposés pour entraîner un déplacement des panneaux latéraux (6, 7, 8, 9) rétractables entre la position étendue et la position rétractée.

10. Procédé de chargement d'une pile de pneus à l'aide de l'appareil de chargement de pneu (10) selon l'une quelconque revendication précédente, le procédé comprenant :
étape 100 : l'extension de chacun de la pluralité de panneaux latéraux (6, 7, 8, 9) rétractables vers une position étendue ;
étape 200 : l'empilage d'une ou plusieurs rangées de pneus dans l'élément porteur (20) ;
étape 300 : l'entraînement de l'appareil de chargement de pneu (10) vers un emplacement de chargement ;
étape 400 : le positionnement de l'élément porteur (20) de telle sorte que la ou les rangées de pneus soient prises en sandwich entre une paroi de l'emplacement de chargement et la paroi arrière (5) de l'élément porteur (20) ou entre une pile de pneus précédemment chargée dans l'emplacement de chargement et la paroi arrière (5) de l'élément porteur (20) ; et
étape 500 : la rétractation de la pluralité de panneaux latéraux (6, 7, 8, 9) rétractables vers une position rétractée afin de déposer la ou les rangées de pneus dans l'emplacement de chargement.

11. Procédé selon la revendication 10, comprenant en outre, après l'étape 100, et avant l'étape 200 :
étape 150 : l'ouverture de la pluralité de panneaux latéraux (6, 7, 8, 9) rétractables vers une position ouverte ;
et après l'étape 200, et avant l'étape 300 :
étape 250 : la fermeture des panneaux latéraux afin de comprimer la ou les rangées de pneus.
